Europäisches Patentamt

European Patent Office

Office européen des brevets

(11) Publication number: **0 163 549**
**B1**

## EUROPEAN PATENT SPECIFICATION

(45) Date of publication of patent specification: **15.11.89**

(51) Int. Cl.⁴: **G 11 B 33/02**

(21) Application number: **85303872.7**

(22) Date of filing: **31.05.85**

(54) Cassette tape recording and/or reproducing apparatus.

(30) Priority: **01.06.84 JP 81785/84**

(43) Date of publication of application:
**04.12.85 Bulletin 85/49**

(45) Publication of the grant of the patent:
**15.11.89 Bulletin 89/46**

(84) Designated Contracting States:
**DE FR GB NL**

(56) References cited:
**DE-A-3 151 715**
**DE-A-3 327 599**
**DE-B-2 152 414**
**FR-A-2 306 500**
**FR-A-2 492 148**

(73) Proprietor: **SONY CORPORATION**
**7-35 Kitashinagawa 6-Chome Shinagawa-ku**
**Tokyo 141 (JP)**

(72) Inventor: **Murakami, Atsushi c/o Sony**
**Corporation**
**Patents Division 7-35, Kitashinagawa 6-chome**
**Shinagawa-ku Tokyo (JP)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to cassette tape recording and/or reproducing apparatus, best suited for a compact tape cassette, and particularly to such cassette tape recording and/or reproducing apparatus, wherein not only a body in which a tape cassette is mounted, but also an openable cover which covers the tape cassette mounted in the body, can be varied together in width, and when the apparatus is in use, the widths of the body and cover are increased to minimal widths necessitated for mounting a cassette, whereas when the apparatus is out of use, the widths of the body and cover .are decreased to smaller widths than those necessitated for mounting the cassette so as to be easier to carry.

In a cassette tape recording and/or reproducing apparatus of this kind, if the widths of the body and cover can be increased or decreased independently to each other, erroneous operations such as mounting the tape cassette while the width of the body is decreased, or decreasing the width of the body while the tape cassette is mounted can occur resulting in the tape cassette or the apparatus being considerably damaged.

DE—A—3,151,715 discloses a cassette recording and/or reproducing apparatus comprising a body having a primary portion containing a tape drive mechanism and in which a cassette can be mounted and a cover pivotably mounted on the primary portion for movement between an open position and a closed position, the cover, in the closed position, covering a cassette mounted on the primary portion of the body.

According to the invention there is provided a cassette tape recording and/or reproducing apparatus comprising:

(a) a primary portion of a body in which a tape drive mechanism is housed;

(b) a secondary portion of said body slidable with respect to the primary portion between a first position where a cassette cannot be mounted and a second position where a cassette can be mounted;

(c) cover supporting means pivotable with respect to the primary portion of the body; and

(d) a cover slidable with respect to the cover supporting means and to cover a cassette mounted in the primary portion and the secondary portion of the body; characterised by

(e) guide means disposed in the primary portion of the body and comprising a first guide part extending parallel to the sliding direction of the secondary portion and a second guide part communicating with the first guide part and extending arcuately around the pivot of the cover supporting means;

(f) first engagement means disposed on a support member on the cover, engaged with the guide means and movable from the first guide part, wherein it keeps the cover in its closed state, to the second guide part wherein it allows pivoting of the cover supporting means to open or close the cover, in accordance with the sliding movement of the cover with respect to the cover supporting means; and

(g) second engagement means disposed on the secondary portion and slidably fitted in the first guide part;

(h) the second engagement means sandwiching the first engagement means while being retained in the first guide part and

(i) the second engagement means releasing the first engagement means upon entering the second guide part.

The invention is diagrammatically illustrated by way of example with reference to the accompanying drawings in which:

Figures 1 to 3 are perspective views used for explaining the manner of handling a cassette tape recording and/or reproducing apparatus according to the invention;

Figure 4 is a front view of cassette tape recording and/or reproducing apparatus according to the invention;

Figures 5A and 5B are sectional views taken on line V—V of Figure 4;

Figures 6A and 6B are sectional views taken on line VI—VI of Figure 4;

Figure 7 is an enlarged sectional view taken on line VII—VII of Figure 5A.

Figure 8 is an enlarged sectional view taken on line VIII—VIII of Figure 5A; and

Figure 9 is an enlarged sectional view taken on line IX—IX of Figure 4.

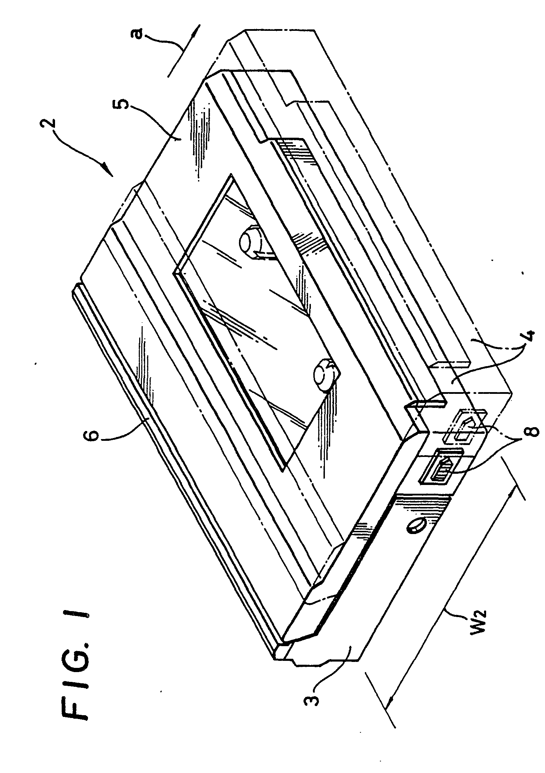

Referring to the drawings, and initially to Figures 1 to 3, a tape cassette 1 is mounted in a body 2 of a cassette tape recorder, which body 2 comprises a primary portion 3 and a secondary portion 4 which are slidably combined with each other so that the width of the body may be increased or decreased as desired.

A cover 5 which covers the tape cassette 1 and is pivotably mounted on the body 2, is combined with the primary portion 3 of the body 2 through a support member 6 and can be varied in width. On the inside of the cover 5, there is arranged a cassette holder 7 which is also combined pivotably with the primary portion 3 of the body 2 together with the support member 6.

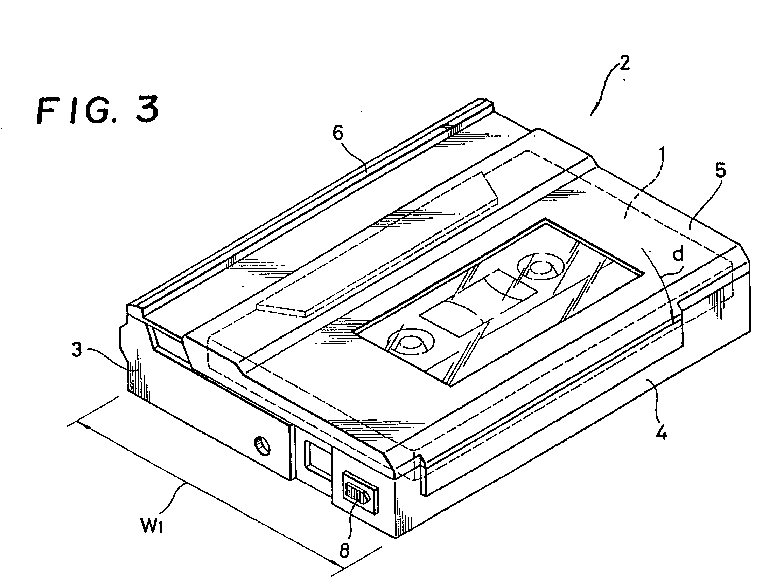

In Figure 3 which shows the cassette tape recorder in use, the widths of both body 2 and cover 5 have been increased to width $W_1$; a minimal width necessitated for mounting the cassette 1, and in Figure 1 which shows the cassette tape recorder out of use, the widths of both the body 2 and the cover 5 have been decreased to width $W_2$: a smaller width than that necessitated for mounting the cassette 1.

When the recorder is to be used, the secondary portion 4 of the body 2 is slid in the direction of arrow *a* with respect to the primary portion 3 of the body 2 as indicated in chain-dotted lines in Figure 1, so that the width of the body 2 is increased from width $W_2$ to width $W_1$. As this happens, the cover 5 is also slid in the direction of arrow *a* together with the secondary portion 4 of the body 2 as kept in the closed state.

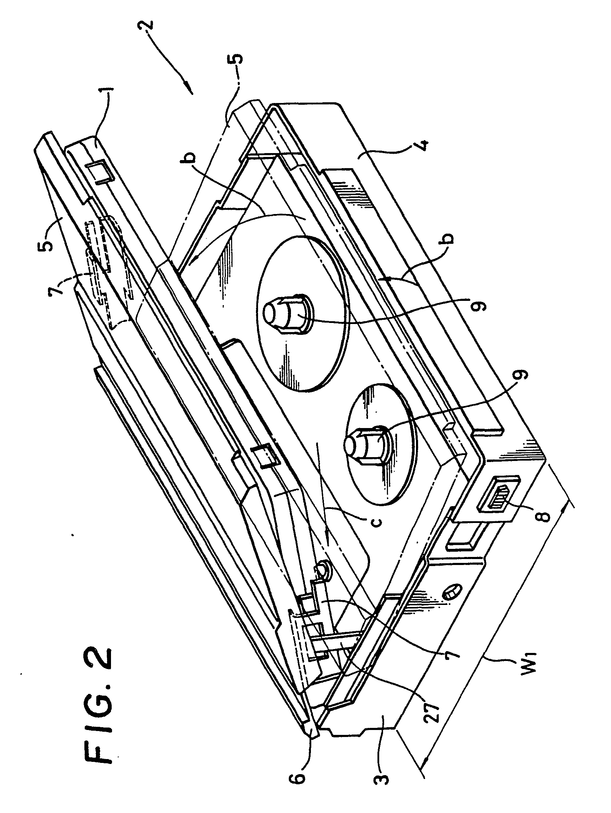

When an unlocking button 8 provided at a side of the secondary portion 4 of the body 2 is pushed, the cover 5 pops up in the direction of arrow b to the position indicated in chain-dotted lines in Figure 2. In succession, if the cover 5 is swung in the direction of arrow b with the finger, the cover 5 is opened as indicated in solid lines in Figure 2. As this happens, the cassette holder 7 follows the cover 5 and is also swung in the direction of arrow b. The pop-up action of the cover 5 is performed through a spring (not shown) sandwiched between the cover 5 and the cassette holder 7, and the cover 5 is kept in the opened position by means of a toggle mechanism.

As shown in Figure 2, the cassette 1 is inserted in the direction of arrow c from above into the cassette holder 7 which is arranged on the inside of the cover 5.

Next, when the cover 5 is swung to the closed position in the direction of arrow d, Figure 3, with the finger, the cassette 1 and cassette holder 7 are also swung in the same direction, so that the cassette 1 is mounted horizontally in a cassette mounting position of the body 2 as indicated in dotted lines in Figure 3.

The cassette tape recorder has a pair of right and left reel bases 9 shown in Figure 2 and a capstan (not shown), within the cassette mounting position of the body 2 like the conventional cassette tape recorder, so that the cassette 1 horizontally mounted is engaged with the pair of reel bases 9 and the capstan, and the closed cover 5 is locked with a locking click mentioned later.

The above described cassette tape recorder is used for reproducing only, so that a playback head, a pinch roller, etc. (not shown) are provided in the cassette holder 7, and the playback head and pinch roller are inserted shallowly into the cassette 1 when the cassette 1 is inserted into the cassette holder 7 as shown in Figure 2. When a playback button is pushed after the cassette 1 has been inserted and the cover 5 closed, the playback head and pinch roller are deeply inserted into the cassette 1, so that the playback head comes in contact under a predetermined pressure with the magnetic tape (not shown) within the cassette 1, and the pinch roller is pressed against the capstan so as to perform a desired reproduction of the cassette 1.

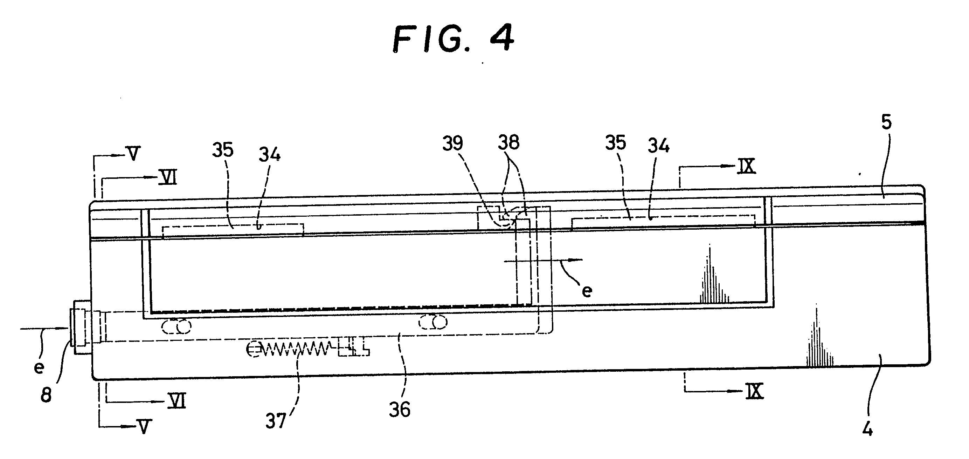

Next, the construction of the cassette tape recorder will be described in detail with reference to Figures 4 to 9.

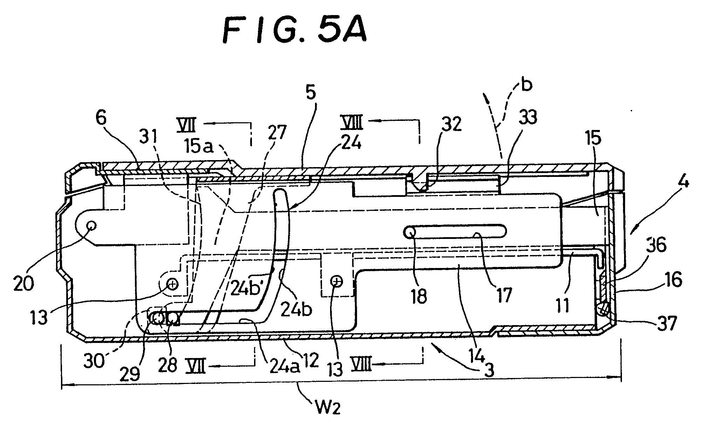

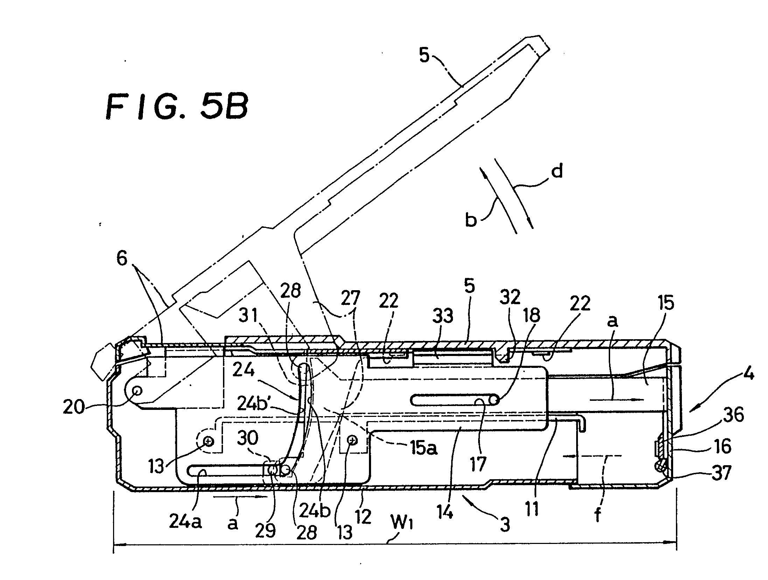

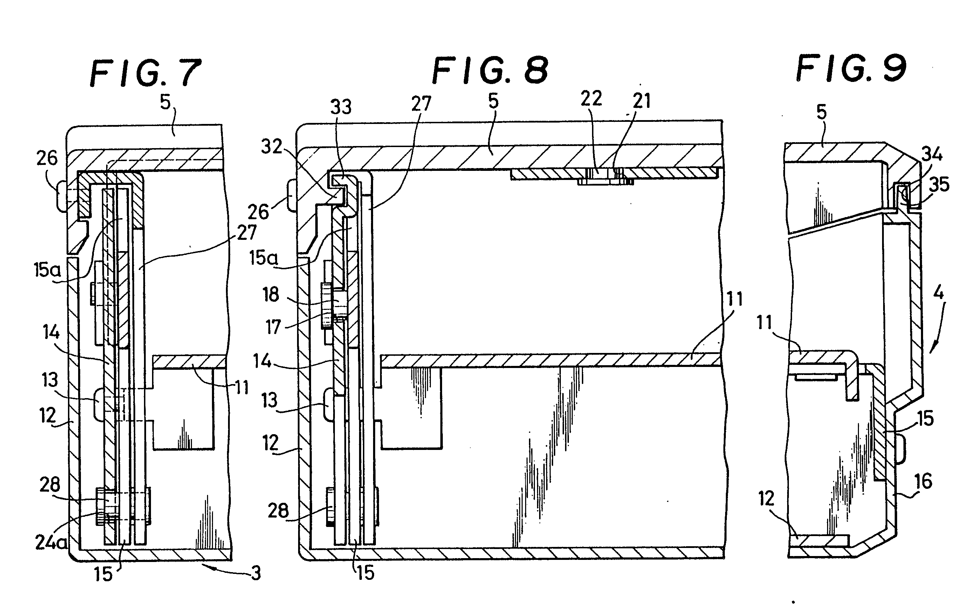

The primary portion 3 of the body 2 comprises a main chassis 11, a primary case 12 secured to the periphery of the main chassis 11 with screws and a guide plate 14 which is secured vertically to one side of the main chassis 11 with screws 13 within the primary case 12 as illustrated in Figures 5 and 7.

The secondary portion 4 of the body 2 comprises a slidable chassis 15 combined slidably with the main chassis 11 and a secondary case 16 secured to the periphery of the slidable chassis 15 with screws. In order to make the drawings simple, there is illustrated a constitution that a guide pin 18 secured to the slidable chassis 15 is guided by an elongate slot 17 provided in the guide plate 14 as shown in Figures 5 and 8.

As shown in Figure 5, the support member 6 is mounted rotatably to the guide plate 14 and the main chassis 11 on a pair of right and left pivots 20, and also the cassette holder 7 is mounted on these pivots 20. Further, the cover 5 is attached to the support member 6 by elongate slots 21 and guide pins 22, and slidable against the support member 6 as shown in Figures 5, 6 and 8.

In the guide plate 14, there is provided an L-shaped guide groove 24 having a linear part 24a parallel to the sliding direction of the slidable chassis 15 and a part 24b circularly curved about the pivot 20 as centre, as shown in Figures 5 and 7. A support member 27 secured at its upper end to the cover 5 with screws 26 projects along the inside of the guide plate 14, and a sliding block 28 attached to the lower end of the support member 27 is slidably fitted in the guide groove 24.

Further, a guide piece 15a which extends almost vertically from one end of the slidable chassis 15 is inserted between the guide plate 14 and the support member 27, and a sliding block 29 secured to the lower end of the guide piece 15a is slidably fitted in the outside groove 24 in a position between the pivot 20 and the sliding block 28. The sliding block 29 protrudes from a small projection 30 formed integrally with the guide piece 15a.

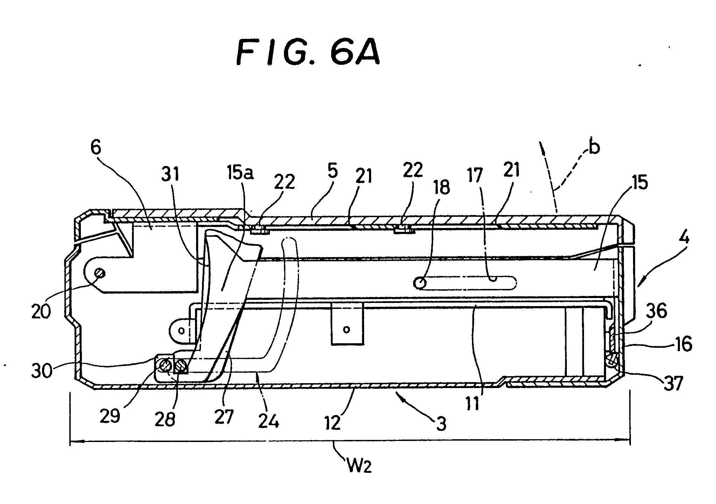

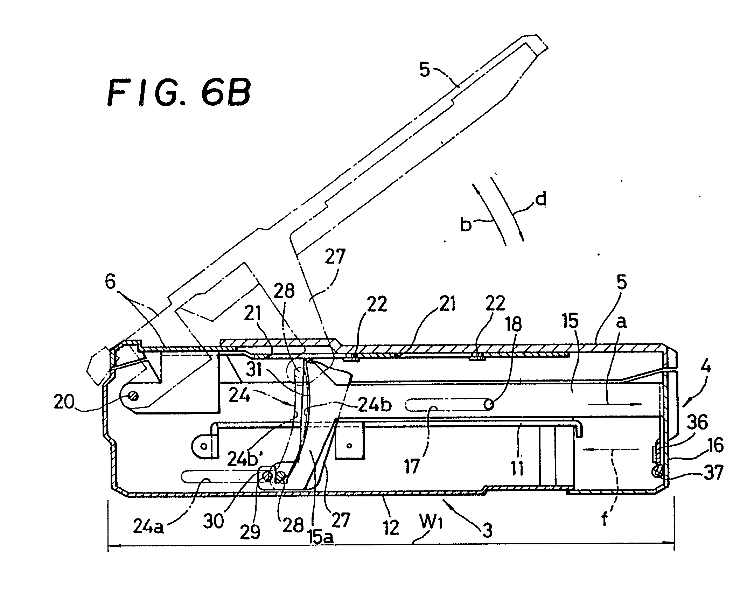

As shown in Figure 6, the guide piece 15a has a circularly curved edge 31 which is exactly the same in configuration as the curved part 24a of the guide groove 24, and the sliding block 28 is sandwiched between the curved edge 31 and the small projection 30. The contact surface of the sliding block 28 with the curved edge 31 is the face of the sliding block 28 remote from the pivot 20.

Next, the width changing movements of the body 2 and cover 5, and the opening and closing movement of the cover 5 will be described.

When the widths of the body 2 and cover 5 are decreased to width $W_2$ as indicated in solid lines in Figure 1, the sliding blocks 28 and 29 are located at one end of the linear part 24a of the guide groove 24 as shown in Figures 5A and 6A. Therefore, the cover 5 cannot be swung in the direction of arrow b in Figure 5A, because the sliding part 28 of the cover 5 is held in the closed state by the linear part 24a of the guide groove 24. In addition, a pawl 32 formed integrally with the cover 5 at a position spaced from the pivot 20 engages in a guide groove 33 which is formed integrally with the guide plate 14 at a position near to its upper edge, as shown in Figures 5 and 8, and the pawl 32 and the guide groove 33 prevent the cover 5 from opening, even if force is applied to open the cover 5 in the direction of arrow b in Figure 5A.

As indicated in chain-dotted lines in Figure 1, if the secondary portion 4 of the body 2 and the cover 5 are slid together in the direction of arrow a, so that the widths of the body 2 and the cover 5 are increased to width $W_1$, the slidable chassis 15 is also slid in the direction of arrow *a* to the position indicated in solid lines in Figures 5B and 6B, and after the sliding blocks 28 and 29 slide along the linear part 24*a* of the guide groove 24 in the direction of arrow *a*, the sliding block 28 enters the curved part 24*b* of the guide groove 24. A plurality of engagement grooves 34 formed at the front end of the closed cover 5 are engaged respectively with a plurality of projections 35 formed at the front end of the secondary case 12 of the body 2 as shown in Figures 4 and 9, so that the secondary portion 4 of the body 2 and the cover 5 are slid surely together and transmit forces to each other.

The cover 5 is kept in the closed state while the sliding block 28 is slid along the linear part 24*a* of the guide groove 24, and released from this closed state, only when the secondary portion 4 of the body 2 reaches a position where its sliding movement is finished and the sliding block 28 has entered the curved part 24*b* of the guide groove 24 as indicated in solid lines in Figures 5B and 6B. Further, at this time, the pawl 32 of the cover 5 is disengaged from the guide groove 33.

Next, when the unlocking button 8 is pushed in the direction of arrow *e* as shown in Figure 4, a sliding plate 36 integral with the unlocking button 8 is slid in the direction of arrow *e* against the force of a spring 37, and a pawl 38 provided at the distal end of and formed integrally with the sliding plate 36 is disengaged from a pawl 39 provided at the front end of the cover 5 as indicated in chain-dotted lines in Figure 4, so that the cover 5 is unlocked.

Hence, the cover 5 can be swung open in the direction of arrow *b* on the pivot 20 together with the support member 6. but the slidable chassis 15 cannot be slid in the direction of arrow *f* (Figures 5B and 6B), because the sliding block 28 which has entered the curved part 24*b* of the guide groove 24 as the cover 5 opens, is sandwiched between the curved edge 31 of the slidable chassis 15 and a curved side edge 24*b'* of the curved part 24*b* of the guide groove, the curved edge 24*b'* being the one nearer to the pivot 20 of the two side edges of the curved part 24*b*.

Thus the cover 5 and the secondary portion 4 of the body 2 are interlocked so that when the cover 5 is being opened, or is opened as indicated in chain-dotted lines in Figures 5B and 6B, it is absolutely impossible to slide the secondary portion 4 of the body 2 in the direction of arrow *f* to decrease the width of the body 2 to the width $W_2$ as indicated in solid lines in Figure 1.

The cover 5 must slide together with the secondary portion 4 of the body 2 in its closed state, and can be opened only when the secondary portion 4 of the body 2 has been moved to the position indicated in solid lines in Figures 5B and 6B so that the width of the body 2 may be increased to width $W_1$.

The width of the body 2 cannot be decreased to width $W_2$ while the cover 5 is being opened, or while it is in the opened position indicated in chain-dotted lines in Figures 5B and 6B, and can be slid in the direction of arrow *f* together with the secondary portion 4 of the body 2, so as to decrease the width of the body 2 to the width $W_1$, only when the cover 5 is closed as indicated in solid lines in Figures 5B and 6B.

Various modifications are possible within the scope of the appended claims, for example, the cassette tape recorder may be such that the cassette holder 7 is omitted and the playback head and pinch roller are disposed on a head base plate attached slidably to the main chassis 11.

Although, as described, the guide groove 24 and the curved edge 31 are disposed in the guide plate 14 and on the slidable chassis 15, respectively, the guide groove 24 and curved edge 31 could be disposed in the primary case 12 and on the secondary case 16, respectively. Further, the curved edge 31 may be a curved groove which is the same in shape as the curved part 24*b* of the guide groove 24.

The invention may be applied not only to a cassette tape recorder for a compact cassette, used only for reproducing but also to various other kinds of cassette tape recording and/or reproducing apparatus for various kinds of cassette, used for recording and/or reproducing.

## Claims

1. A cassette tape recording and/or reproducing apparatus comprising:

(a) a primary portion (3) of a body (2) in which a tape drive mechanism is housed;

(b) a secondary portion (4) of said body (2) slidable with respect to the primary portion (3) between a first position where a cassette cannot be mounted and a second position where a cassette can be mounted;

(c) cover supporting means (6) pivotable with respect to the primary portion (3) of the body (2); and

(d) a cover (5) slidable with respect to the cover supporting means (6) and to cover a cassette mounted in the primary portion (3) and the secondary portion (4) of the body (2); characterised by

(e) guide means (24) disposed in the primary portion (3) of the body (2) and comprising a first guide part (24*a*) extending parallel to the sliding direction of the secondary portion (4) and a second guide part (24*b*) communicating with the first guide part (24*a*) and extending arcuately around the pivot of the cover supporting means (6);

(f) first engagement means (28) disposed on a support member (27) on the cover (5), engaged with the guide means (24) and movable from the first guide part (24*a*) wherein it keeps the cover in its closed state, to the second guide part (24*b*), wherein it allows pivoting of the cover supporting means (6) to open or close the cover (5); in accordance with the sliding movement of the cover (5) with respect to the cover supporting means (6); and

(g) second engagement means (30) disposed on the secondary portion (4) and slidably fitted in the first guide part (24a);

(h) the second engagement means (28) sandwiching the first engagement means (24a) and being retained in the first engagement means (28) upon entering the second guide part (24b).

(i) the second engagement means (30) releasing the first engagement means (28) upon entering the second guide part (24b).

2. A cassette tape recording and/or reproducing apparatus according to claim I: in which an abutting means (31) slidable with the secondary portion (4) of the body (2) abuts against the first engagement means (28) when the first engagement means (28) is in the second guide part (24b) of the guide means (24) and prevents the secondary portion (4) being moved from the second position to the first position.

3. A cassette tape recording and/or reproducing apparatus according to claim 2: in which the abutting means (31) is of substantially the same arcuate configuration as the second guide part (24b) of the guide means (24) and engages a side of the first engagement means (28) remote from the fulcrum of the cover supporting means (6).

4. A cassette tape recording and/or reproducing apparatus according to claim 2, in which the second engagement means (30) is formed integrally with the abutting means (31) and moves the first engagement means (28), as the secondary portion (4) of the body (2) moves between the first position and the second position.

## Patentansprüche

1. Bandcassettenaufzeichnungs- und/oder Wiedergabegerät mit

(a) einem primären Abschnitt (3) eines Körpers (2), in dem ein Bandantriebsmechanismus untergebracht ist,

(b) einem sekundären Abschnitt (4) des Körpers (2), der in Bezug auf den primären Abschnitt (3) zwischen einer ersten Position, in der eine Cassette nicht befestigbar ist, und einer zweiten Position, in der eine Cassette befestigbar ist, bewegbar ist,

(c) einer in Bezug auf den primären Abschnitt (3) des Körpers (2) schwenkbaren Abdeckungsstützeinrichtung (6), und

(d) einer in Bezug auf die Abdeckungsstützeinrichtung (6) bewegbaren und zum Abdecken einer in dem primären Abschnitt (3) und dem sekundären Abschnitt (4) des Körpers (2) befestigten Cassette dienenden Abdeckung (5), gekennzeichnet durch

(e) eine in dem primären Abschnitt (3) des Körpers (2) angeordnete und ein sich parallel zur Bewegungsrichtung des sekundären Abschnitts (4) erstreckendes erstes Führungsteil (24a) und ein mit dem ersten Führungsteil (24a) in Verbindung stehendes und sich um den Drehpunkt der Abdeckungsstützeinrichtung (6) gebogen erstreckendes zweites Führungsteil (24b) aufweisende Führungseinrichtung (24),

(f) eine auf einem Stützteil (27) auf der Abdeckung (5) angeordnete, mit der Führungseinrichtung (24) in Eingriff stehende und von dem ersten Führungsteil (24a), bei welchem sie die Abdeckung in ihrem geschlossenen Zustand hält, zu dem zweiten Führungsteil (24b), bei welchem sie ein Verschwenken der Abdeckungsstützeinrichtung (6) zum Öffnen oder Schließen der Abdeckung (5) ermöglicht, in Übereinstimmung mit der Verschiebebewegung der Abdeckung (5) in Bezug auf die Abdeckungsstützeinrichtung (6) bewegbare erste Eingriffseinrichtung (28), und

(g) eine auf dem sekundären Abschnitt (4) angeordnete und gleitend in das erste Führungsteil (24a) eingesetzte zweite Eingriffseinrichtung (30),

(h) wobei die zweite Eingriffseinrichtung (30) zu beiden Seiten der ersten Eingriffseinrichtung (28) angeordnet ist, wenn diese in dem ersten Führungsteil (24a) gehalten ist, und

(i) wobei die zweite Eingriffseinrichtung (30) die erste Eingriffseinrichtung (28) beim Eintritt in das zweite Führungsteil (24b) freigibt.

2. Bandcassettenaufzeichnungs- und/oder Wiedergabegerät nach Anspruch 1, wobei eine mit dem sekundären Abschnitt (4) des Körpers (2) verschiebbare Anschlageinrichtung (31) gegen die erste Eingriffseinrichtung anliegt, wenn die erste Eingriffseinrichtung (28) in dem zweiten Führungsteil (24b) der Führungseinrichtung (24) ist, und verhindert, daß der sekundäre Abschnitt (4) von der zweiten Position in die erste Position bewegt wird.

3. Bandcassettenaufzeichnungs- und/oder Wiedergabegerät nach Anspruch 2, wobei die Anschlageinrichtung (31) von der im wesentlichen gleichen gebogenen Konfiguration wie das Führungsteil (24b) der Führungseinrichtung (24) ist und in eine Seite der von dem Drehpunkt der Abdeckungsstützeinrichtung (6) entfernten ersten Eingriffseinrichtung (28) eingreift.

4. Bandcassettenaufzeichnungs- und/oder Wiedergabegerät nach Anspruch 2, wobei die zweite Eingriffseinrichtung (30) aus einem Stück mit der Anschlageinrichtung (31) gebildet ist und die erste Eingriffseinrichtung (28) bewegt, wenn sich der sekundäre Abschnitt (4) des Körpers (2) zwischen der ersten Position und der zweiten Position bewegt.

## Revendications

1. Appareil d'enregistrement et/ou de lecture de bande magnétique en cassette, comprenant:

(a) une partie principale (3) d'un corps (2) dans lequel est logé un mécanisme d'entraînement de bande,

(b) une partie secondaire (4) du corps (2) pouvant coulisser par rapport à la partie principale (3) entre une première position dans laquelle une cassette ne peut pas être montée et une seconde position dans laquelle une cassette peut être montée,

(c) un dispositif (6) de support de couvercle, pouvant pivoter par rapport à la partie principale (3) du corps (2), et

(d) un couvercle (5) destiné à coulisser par rapport au dispositif (6) de support de couvercle et destiné à recouvrir une cassette montée dans la partie principale (3) et dans la partie secondaire (4) du corps (2), caractérisé par:

(e) un dispositif de guidage (24) placé dans la partie principale (3) du corps (2) et comprenant une première partie de guidage (24a) qui est parallèle à la direction de coulissement de la partie secondaire (4) et une seconde partie de guidage (24b) communiquant avec la première partie de guidage (24a) et disposée en courbe autour du pivot du dispositif (6) de support de couvercle,

(f) un premier dispositif de coopération (28) disposé sur un organe de support (27) placé sur le couvercle (5), en coopération avec le dispositif de guidage (24) et mobile de la première partie de guidage (24a), dans laquelle il maintient le couvercle à son état fermé, à la seconde partie de guidage (24b), dans laquelle il permet le pivotement du dispositif (6) de support de couvercle afin que le couvercle (5) soit ouvert ou fermé, en fonction du mouvement de coulissement du couvercle (5) par rapport au dispositif (6) de support de couvercle, et

(g) un second dispositif de coopération (30) disposé sur la partie secondaire (4) et monté de manière qu'il puisse coulisser dans la première partie de guidage (24a),

(h) le second dispositif de coopération (30) chevauchant le premier dispositif de coopération (28) en étant retenu dans la première partie de guidage (24a), et

(i) le second dispositif de coopération (30) libérant le premier dispositif de coopération (28) après entrée dans la seconde partie de guidage (24b).

2. Appareil d'enregistrement et/ou lecture d'une bande en cassette selon la revendication 1, dans lequel un dispositif de butée (31) destiné à coulisser avec la partie secondaire (4) du corps (2) est en butée contre le premier dispositif de coopération (28) lorsque le premier dispositif de coopération (28) se trouve dans la seconde partie de guidage (24b) du dispositif de guidage (24) et empêche le déplacement de la partie secondaire (4) de la seconde position vers la première.

3. Appareil d'enregistrement et/ou lecture de bande en cassette selon la revendication 2, dans lequel le dispositif de butée (31) a pratiquement la même configuration courbe que la seconde partie de guidage (24b) du dispositif de guidage (24) et est au contact d'un côté du premier dispositif de coopération (28) qui est distant du pivot du dispositif (6) de support du couvercle.

4. Appareil d'enregistrement et/ou lecture de bande en cassette selon la revendication 2, dans lequel le second dispositif de coopération (30) est formé en une seule pièce avec le dispositif de butée (31) et déplace le premier dispositif de coopération (28) lorsque la partie secondaire (4) du corps (2) se déplace entre la première et la seconde position.

FIG. 1

# FIG. 2

EP 0 163 549 B1

FIG. 3

EP 0 163 549 B1

# FIG. 4

FIG. 5A

## FIG. 5B

# FIG. 6A

# FIG. 6B

FIG. 7

FIG. 8

FIG. 9

EP 0 163 549 B1